# EUROPEAN PATENT APPLICATION

(11) **EP 1 655 249 A1**
(43) Date of publication of application: **10.05.2006**
(21) Application number: 05019422.4
(22) Date of filing: 07.09.2005
(51) Int. Cl.: B65G 53/06, B65G 53/46

(54) **Apparatus and pipe system for automatic removal of residual matter**

(30) Priority: 07.09.2004 DK 200401350
(71) Applicant: VMP A/S, 6500 Vojens (DK)
(72) Inventor: Poulsen, Peter, 7100 Vejle (DK)
(74) Representative: Olsen, Peter Vestergaard

(57) **Abstract**

The invention concerns an apparatus for transporting by-products, where the apparatus interacts with production equipment conducting by-products to a chamber, where the chamber is connected to a medium inlet, and where the chamber is connected to a pipe system conducting the by-products to central processing and/or storage. It is the purpose of the invention to provide a flexible and efficient apparatus for transporting by-products in connection with production. The chamber may be designed as a partially open duct, that the duct includes at least one nozzle, that the nozzles communicates with at least one high pressure medium inlet, and that the duct has an outlet communicating with a pipe system, where the duct is emptied of by-products by supplying medium under high pressure to the nozzle which directs medium at high speed from a direction directed mainly towards the outlet of the duct, whereby medium and by-products are transported away through the pipe system.

Hereby may be achieved an apparatus that may efficiently handle the by-products appearing in connection with production machines. With by-products here is meant cuttings from machining operations, but may also include cutting from e.g. a plastic production, while by-products from e.g. food producing units may be moved away in this way. For example, removal of slaughterhouse waste may occur very efficiently.

## Description

### Field of the Invention

The invention concerns an apparatus for transporting by-products, where the apparatus interacts with production equipment conducting by-products to a chamber, where the chamber is connected to a medium inlet, and where the chamber is connected to a pipe system conducting the by-products to central processing and/or storage.

### Background of the Invention

Storage of chippings from machines with cutting tools is divided into decentralised and centralised storage facilities, respectively. The traditional and decentralised method is based on a cart or a container, which is juxtaposed to the machine, being filled with residual material or by-products, and which is then emptied manually, which is both cumbersome and time-consuming. Furthermore, this takes up space, meaning that allowance is to be made for this at the planning of the factory layout, e.g. by disposition of i.a. production machines where lack of space is a common problem. The method is therefore not very well suited for larger production plants where several machines with cutting tools are standing side by side, as this requires time-consuming emptying of each and every cart or container. In order to avoid manual work, various automatic systems have been developed, which may transport the redundant by-product to a central storage site by means of conveyor belts etc.

In US 6,367,576 B1 there is disclosed a conveying system for removal of residual material from a machine with cutting tools. The system is based on a conveyor belt system so that the machine may be disposed at a certain distance from the storage. The system contains many movable mechanical parts.

In large production plants, a conveyor belt system is often used, where the conveyor belts are running under the floor of the plant from the machines to a central storage site. The disadvantage of this method is that the system is costly to install and maintain. Since the conveyor belt systems contain many moving parts, there is often a considerable maintenance work in connection with changing and servicing the moving parts. Besides, this implies temporary stops in production which is very costly.

Besides, it is also time-consuming as access to the conveyor belt systems is made difficult due to the disposition under the floor of the production plant.

Besides, the above transport systems are difficult or even impossible to install in existing production plants.

The above systems are open systems, meaning that the residual material lies in open containers or is conveyed in transport systems under the floor, only separated by floor gratings with through-going holes. This may entail that gasses are released to the working environment by machining i.a. moulded items at which gasses may be released.

US 4,666,347 describes hydraulic transport of solid particles by firstly mixing the solid particles with a fluid medium for formation of a viscous material of about uniform nature. The viscous material is injected into a flowing hydraulic medium.

From DE 10 02 25 319 A1 is known a system for transporting and comminuting metal cuttings from production machines. The system utilises liquid as transport medium. A collecting chamber interacts with one or more gates, where the collecting chamber communicates with a medium inlet and an outlet communicating with a pipe system.

### Object of the Invention

It is the purpose of the invention to provide a flexible and efficient apparatus for transporting by-products in connection with production.

### Brief Description of the Invention

This may be achieved with a system as described in the introduction, if the chamber is designed as a partially open duct, that the duct includes at least one nozzle, where the nozzles communicates with at least one high pressure medium inlet, and where the duct has an outlet communicating with a pipe system, where the duct is emptied of by-products by supplying medium under high pressure to the nozzle which directs medium at high speed from a direction directed mainly towards the outlet of the duct, whereby medium and by-products are transported away through the pipe system.

Hereby may be achieved an apparatus that may efficiently handle the by-products appearing in connection with production machines. By by-products is here meant cuttings from machining operations, but may also include cuttings from e.g. a plastic production, while by-products from e.g. food producing units may be removed in this way. For example, removal of slaughterhouse waste may be effected very efficiently.

The invention may also find application within the wood industry for removal of residual material. By-products may be collected and transported away through a pipe system. Pipe systems may be easy to establish in an existing production where the pipes may be suspended under the ceiling, and where even thin pipes may be used for transporting large amounts of residual waste, e.g. in connection with machining operations, in particular on large CNC units.

Besides, the invention is space-saving compared with prior art systems, as it is not necessary to have a container placed beside the machines. Furthermore, one avoids making allowance for access conditions to transport systems running under the floor etc.

The medium that may be used can e.g. be air, or it may be an compressible liquid or it may be and incompressible liquid. Concrete examples may be water, oil or air, but it is important to note that the invention is not limited to these.

Furthermore, the advantage that the apparatus contains very few movable parts may be achieved, as the pipe system as such is a stationary system without any movable parts. Only comminuting apparatuses and gate systems comprise movable parts, and since none of the parts are hidden under a floor but are readily accessible, this system may be serviced in a very simple and efficient way, if required at all.

Pipe systems as such may be flushed by using medium without any by-products, whereby most of the cloggings that may occur can be removed automatically. Besides, the system is closed, which means that gases released when working certain materials, such as moulded materials etc., are not released to the surrounding working environment. This is a great advantage compared with prior art techniques where the residual material lies in open containers or runs in conveyor belts under the floor where the gases may rise up freely through the holes in the floor gratings.

Advantageously, the system may comprise a number of comminuting means which may communicate with production machines, where by-products of uniform material is transported in a common pipe system, and where the system contains independent pipe systems for transporting incompatible by-products. Hereby may be achieved that a pipe system can be built up with independent pipe strings, so that by-products from different materials may be conveyed independently of each other.

This may e.g. be suitable if one by-product is stainless steel while the other by-product is maybe aluminium, if a production facility is working with both materials. All machines producing waste in the shape of steel cuttings may thereby deliver by-products to the same pipe system, while the machines producing aluminium deliver by-products to a separate system. In a very large production facility there may be arranged a very large number of parallel pipe systems where automatic switches associated with individual machines may automatically change the handling of by-product to the right pipeline, if products are changed on individual machining machines.

By means of the gate, the underlying chamber may be closed, thus ensuring that the rise in pressure occurring by adding medium through the underlying duct is not lost through the apparatus, why the gate prevents a pressure drop in the system. At the same time, possible collection of by-products occurs on the top side of the gate, where the amount of by-products conveyed onwards to the underlying funnel may be adjusted to a certain extent by means of the gate.

Advantageously, medium may be fed to the underlying duct from at least one direction, this direction directed towards the outlet of the duct. Hereby may be achieved that the by-products collected in the duct may be accelerated very efficiently by the incoming medium in direction towards the outlet of the duct, where continued inflow of medium under pressure very quickly produces a sharp increase in speed and thereby squeezes and presses by-products into a pipe system where, if medium of sufficient pressure is applied, additionally transport in vertical direction may occur without using any other pumping means.

More advantageously, the inlet of the duct may contain at least one inlet nozzle. Hereby may be achieved a further increase of the speed of the incoming medium. Depending on the shape of the nozzle, a strong through-flow of medium may occur through the duct, whereby by-products are conveyed away very efficiently through the subsequent pipe system.

A preferred embodiment of the invention is that part of the duct is funnel-shaped so that the outlet of the duct is narrowed in direction towards the outlet of the duct, from where there is connection to the pipe system. Hereby may be achieved that a large amount of by-products can be led in through the pipe system, where supply of medium may be effected from several nozzles all pointing in direction of the opening of the funnel.

Advantageously, inlet nozzle and outlet of the duct may be designed with approximately the same diameter. Hereby may be achieved a great speed of medium and by-products when the mixture is to leave the duct. The speed may approximately attain the same size, or become greater than the incoming speed of medium through the inlet nozzle.

Advantageously, the apparatus may contain three lesser sub-chambers which are separated by means of two gates. Hereby may be achieved a very precise control of the amount of by-products delivered down to the duct for removal, and at the same time it is achieved that there is always a closed gate above the duct system. Medium inflow through the duct may thereby occur independently of the position of the gates, provided that first and second gate are controlled so that one of the gates is always closed.

Advantageously, at least one of the gates may be connected to a control and regulating unit. Hereby may be achieved an efficient control of the opening and closing of the gates; this may e.g. occur in dependence on the amount of residual waste passing through the comminuting apparatus.

Advantageously, the gates may open and close in mutual dependence. Hereby may be achieved a simple, however at the same time very efficient control of the gates, so that the upper gate may only be opened when the lower gate is closed.

In a possible embodiment, the duct may be disposed horizontally. Hereby may be achieved that the duct can be produced under an existing handling system for by-products. I.e. under an existing machining machine where a funnel system, possibly in connection with a comminuting apparatus, may lead the residual waste in direction towards the opening of the duct. The duct may then be emptied by adding medium under high pressure, and this may occur either in dependence on fixed time intervals or in dependence on a control which on the basis of measurement of the actual amount of residual products opens and closes the supply of high pressure medium to the nozzle.

In an alternative embodiment, the duct may be disposed vertically. Hereby may be achieved that the duct takes up very little space in relation to a production apparatus. The duct may communicate with an inclining funnel, the outlet of which directed right against the vertically standing duct. Thereby a very space-saving disposition of the apparatus may be achieved, as the apparatus only takes up the size of the funnel plus largely the width of the pipe connection which is to stand as transport of the residual products away from the production machine. The nozzle of the duct is thus to perform injection of medium under high pressure from below and upward in order to perform transport of the waste products up into an associated pipeline. By correct dimensioning of the supplied amount of medium and pressure, respectively, and the size of nozzle, there may be attained a lifting height which on the whole is entirely sufficient for removal of residual products by the vertical disposition of the duct.

Advantageously, the outlet of the duct may be connected to a pipe system, where the pipe system is fed from a plurality of ducts, where there is provided at least one inlet to the pipe system which is a high pressure inlet for medium under high pressure, and where high pressure inlets are formed as nozzles directed primarily in the flow direction of the medium. Hereby may be achieved that the medium flow in the pipe system is substantially increased, since medium is supplied under high pressure where inlets from pipe branches are provided, but also on long pipe stretches medium is supplied with fixed minimum spacing. The medium fed to the pipe system will always be supplied through nozzles which are directed in the flow direction in order thereby to increase the flow rate optimally.

The pipe system may communicate with pressurised air nozzles which are connected to a system of pressurised air via regulating valves, where pressurised air is supplied to the pipe system in order to increase the flow rate of the medium. Hereby may be achieved that the medium flow rate may be further increased as the supplied pressurised air will expand violently in the pipe system. Thereby a rise in pressure will occur which will strongly accelerate the medium flow rate. Pressurised air may be supplied in dependence on an actual situation of operation, so that during a normal situation of operation the pressurised air nozzles will remain closed, but if the medium flow is retarded for some reason or other, or a beginning clogging occurs, pressurised air will instantaneously be injected through the pressurised air nozzles. A plurality of pressurised air nozzles my be controlled from a superior control unit which also controls medium injection into the pipe system, whereby special algorithms may be developed for medium flushing, where by programming the flow rate is increased by feeding pressurised air to the pipe system at certain times.

The pipe system may be connected to at least one venting valve. Hereby may be achieved that the pipe system is primarily filled with medium, as air which either may be added together with by-products or supplied via pressurised air nozzles may leave the system through venting valves. The venting valves may advantageously be designed in such a way that they shut automatically at the moment when they e.g. come into contact with liquid. Hereby is ensured that a venting valve will remove air but not cause leakage of other medium.

### Description of the drawing

The invention is described in more detail with reference to the drawing, where:
- FIG. 1: shows an apparatus for comminuting and transporting residual material;
- FIG. 2: shows a nozzle for transporting residual material;
- FIG. 3: shows a perspective view of a nozzle from the previous Figure;
- FIG. 4: shows a nozzle with funnel-shaped duct outlet; and
- FIG. 5: shows an assembled transport system.

### Detailed Description of the Invention

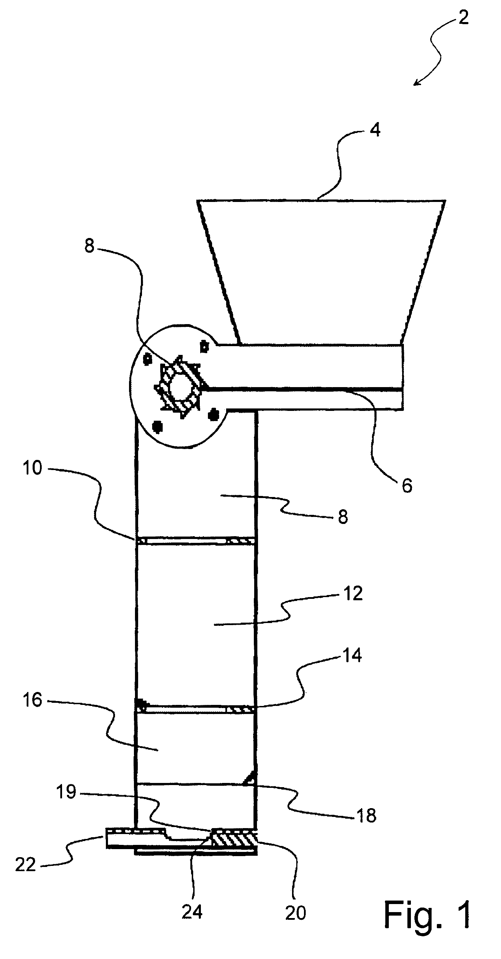

Fig. 1 shows an apparatus 2 for comminuting and transporting a residual material (not shown) consisting of a funnel 4 which communicates with a conveyor belt 6 forming a connection to the comminuting apparatus 8. Under the comminuting apparatus 8 there is shown a first collecting chamber 8 which is terminated with a first slide gate 10. Under the comminuting apparatus 10 there is shown a second chamber 12 which is terminated with a second slide gate 14. Under the second slide gate 14 is shown a third chamber 16 with a sloping end 18 leading down to a duct 19 having a medium inlet 20 and an outlet 22 and an inlet nozzle 24.

The residual material coming from the machining machine is conducted via the funnel 4 down upon the conveyor belt 6 which then moves the residual material to the comminuting apparatus 8 that consists of a system of knives. The comminuting apparatus 8 reduces the size of the residual material to a predetermined maximum size. The residual material then falls down into the first chamber 8, where the amount may be controlled by means of a first slide gate 10, and further down into a second chamber 12, which is controlled by means of a second slide gate 14. By means of this subdivision it is possible to determine the amount of residual material which is to be removed at a time. At last, the residual material is led down into the third chamber 16 which is terminated by a duct 19, where the residual material is flushed out through the pipe system (not shown) by medium pressure, and onwards to a centrally disposed container or similar.

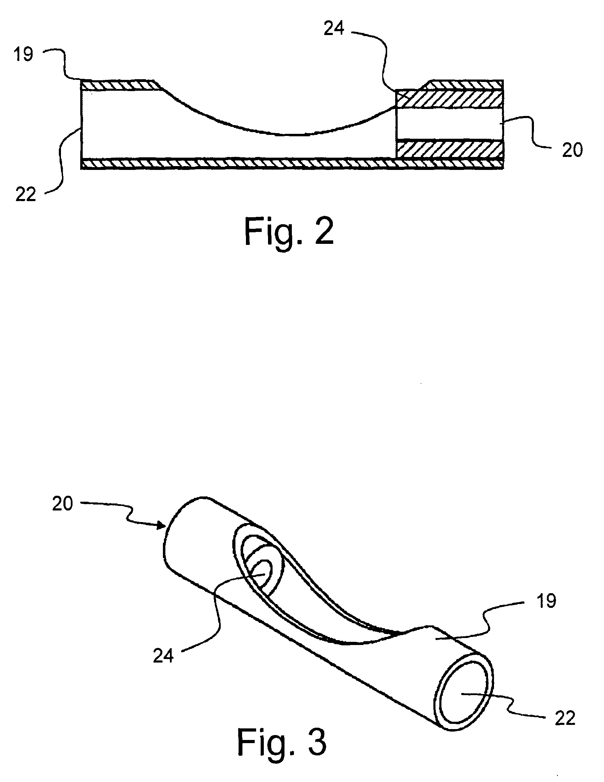

On Fig. 2 is seen a duct 19 with an inlet 20 containing an inlet nozzle 24 and an outlet duct 22. The inlet duct is connected to a pump via a pipe system (not shown) which is capable of providing the required liquid pressure. The outlet duct is connected to a pipe system (not shown) conducting the residual material on to a centrally disposed silo or container where the residual material is stored.

On Fig. 3 the duct 19 is seen perspective view, comprising a duct inlet 20, an inlet nozzle 24 and an outlet duct 22. The duct 19 may be connected to a pressure source via the duct inlet 20. This pressure source can e.g. be air, or it may be an compressible liquid or it may be and incompressible liquid. At the passage of the nozzle 24, the flow rate of the medium is increased so that the by-products possibly contained in the duct 19 are imparted a sharp increase of speed out through the duct outlet 22 which communicates with a not shown pipe system.

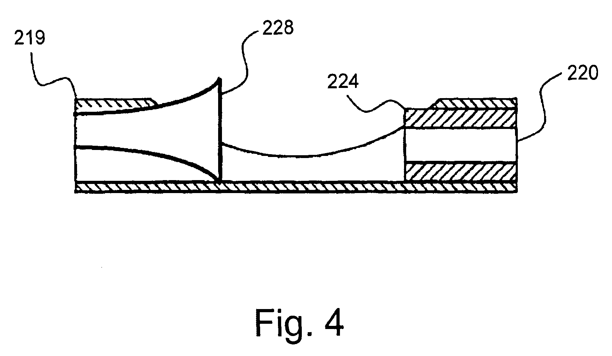

On Fig. 4 is seen a nozzle consisting of a duct with a funnel-shaped duct outlet 228, a duct inlet 220 and a nozzle 224. Hereby may be achieved that a larger part of the by-products lying upon the duct are caught, where these are automatically transported into the funnel 228 via a medium inflow through the nozzle 224, whereby an increase in speed will occur due to the through-flowing medium and the by-products contained therein which are conducted onwards through the system to a pipe system.

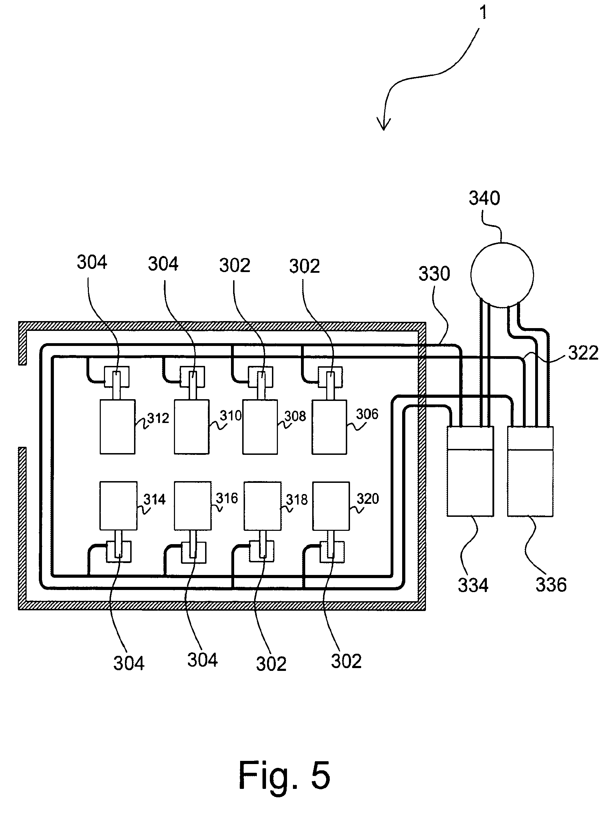

On Fig. 5 is shown an assembled system consisting of apparatuses according to the invention 302, 304 communicating with e.g. machining units with cutting tools 306 - 320. The apparatuses according to the invention 302 are all communicating with a first pipe system 330 where all apparatuses according to the invention 304 communicate with a second pipe system 332. The pipe system 330 communicates with a collecting container 334 where the pipe system 332 communicates with a collecting system 336. The collecting systems 334, 336 also communicate with pump and separation means 340, where separation of the medium used for transporting by-products is effected for recycling of this medium.

By a system as described on Fig. 5, it is thus shown that various forms of by-products may be handled independently of each other and collected in independent collecting tanks. Hereby may e.g. be achieved that cuttings from a steel production are not mixed with cuttings from an aluminium production. The system itself can be built so flexible that in connection with individual work positions there may be effected change between coupling to a plurality of different pipe systems.

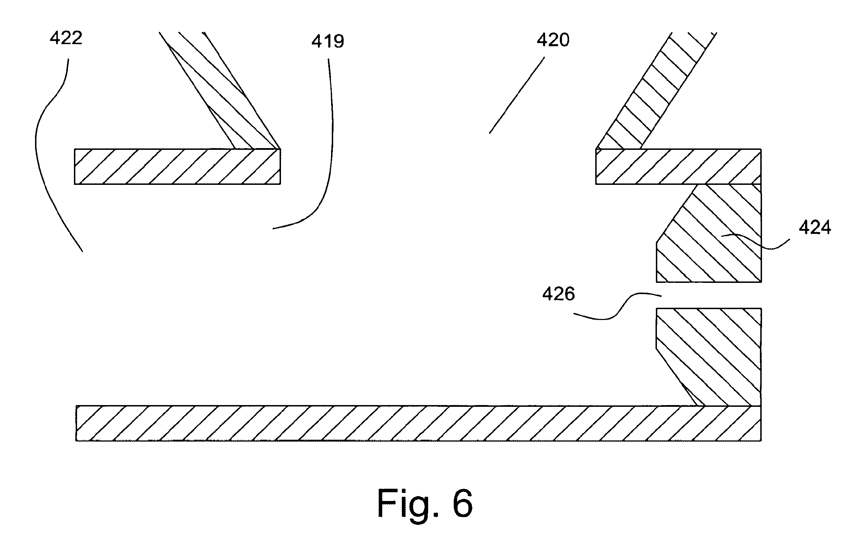

Fig. 6 shows a detailed embodiment of a duct 419 having an inlet 420 for residual material and a medium outlet 422. The duct 419 is delimited by a nozzle 424 that acts as a delimitation of the duct 419. The nozzle 424 has a nozzle opening 426 where the nozzle opening is pointing directly towards the outlet 422 of the duct 419.

If the duct 419 is filled with by-products in the form of e.g. cuttings, these by-products will be pushed out through the duct outlet 422 with high speed as soon as a high pressure medium is conducted through the nozzle opening 426. Advantageously, the nozzle 424 communicates with a high pressure medium supply which via a valve pulsatingly opens and closes for medium flow through the nozzle duct 426. The medium flow through the nozzle may be regulated in dependence of the degree of filling of the duct 419. A possibility will also be a time control so that medium pressure through nozzle duct 426 is activated with fixed intervals, whereby by-products, which have fallen down into the duct, are conducted onwards through outlet duct 422 every time, independently of the size of the amount.

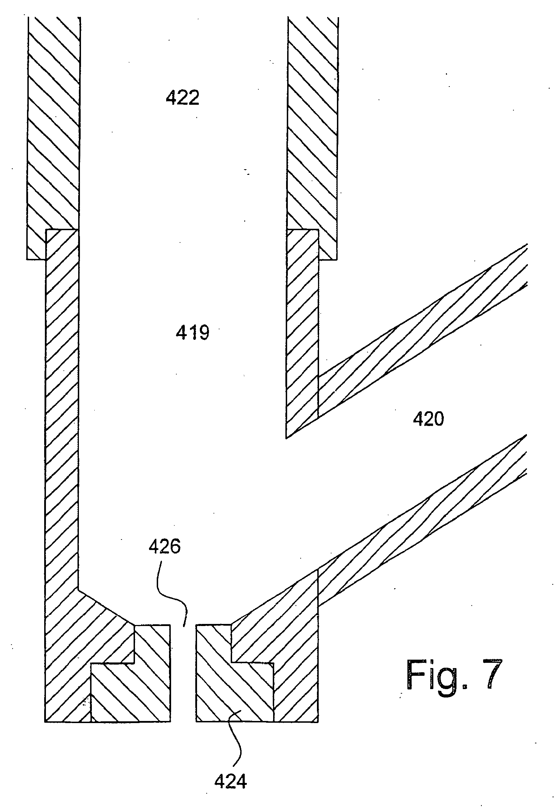

Fig. 7 shows a vertical embodiment of the invention, where the duct 419 is shown vertical and where an inlet 420 and an outlet 422 are found, indicated here through a pipe connection. At the bottom, the duct 419 is terminated by a nozzle 424 which is provided with a nozzle duct 426.

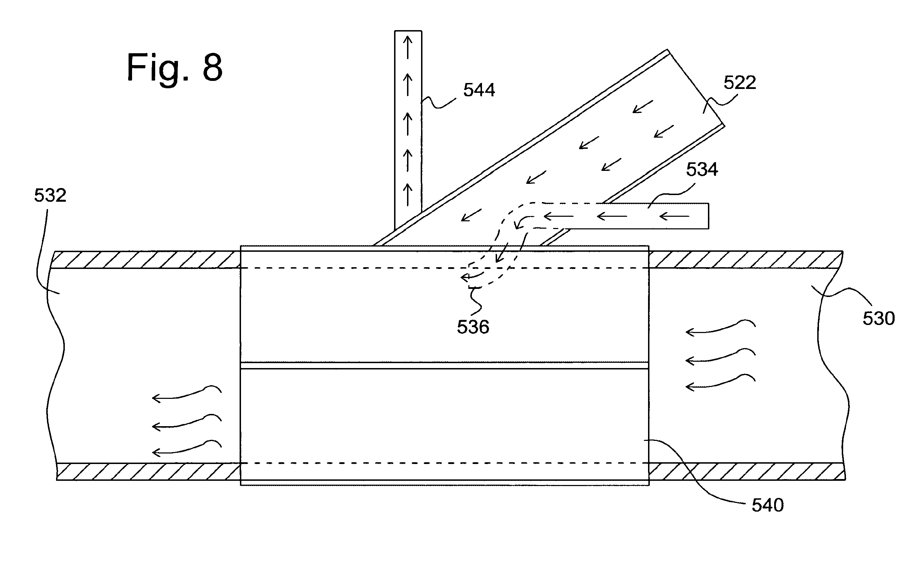

Fig. 8 shows an outlet duct 522 extending into a main duct 530 where a medium flow is already occurring, where the medium flow may contain by-products. The by-products, together with medium from the pipe connection 522 and from the duct 530, are joined and flow onwards through a pipe connection 532. A medium inlet 534 for letting in high pressure medium has a connection into the upper part of the pipe connection 530, 532, where the high pressure medium is supplied by a nozzle 536. The inlet 522 and its pipe branch are fastened on duct 530, 532 by a sleeve 540. An air outlet 544 is shown connected to medium inlet 522.

The two streams of by-products plus medium, which flow in the pipe connection 530 and pipe connection 522, respectively, are combined, and depending on whether one desires an increase of speed of the combined medium flow, additional medium can be supplied through the pipe connection 534 and nozzle 536. By feeding medium under high pressure through the nozzle 536, the supplied medium may achieve a very high speed influencing the flow speed out of the pipe connection 532. In order to increase the transport speed of a mixture of medium and by-products, it will also be suitable to supply pressurised air through nozzles at different points on a pipe connection. The pressurised air will expand abruptly in the pipe connection 530 and thereby further increase the flow rate. In order to remove possible air, which is either supplied via the pressurised air system or added with the by-products when the latter are injected into the pipe system under high pressure, it may be suitable to provide a venting so that the duct 530, 532 is mainly filled with the flowing medium. Therefore, venting ducts 544 are used for removing excess air. The venting ducts may advantageously communicate with valves so that closing is automatically effected if the liquid level rises up to the air valve.

## Claims

1. Apparatus for transporting by-products, where the apparatus (2) interacts with production equipment conducting by-products to a chamber (8, 12, 16), where the chamber is connected to a medium inlet, and where the chamber is connected to a pipe system conducting the by-products to central processing and/or storage, **characterised in that** the chamber is designed as a partially open duct (19, 219), that the duct includes at least one nozzle, that the nozzles communicates with at least one high pressure medium inlet (20, 220), and that the duct has an outlet (22, 228) communicating with a pipe system (322, 330), where the duct (19, 219) is emptied of by-products by supplying medium under high pressure to the nozzle which directs medium at high speed from a direction directed mainly towards the outlet (22, 228) of the duct, whereby medium and by-products are transported away through the pipe system.

2. Apparatus according to claim 1, **characterised in that** part of the duct (228) is funnel-shaped so that the outlet of the duct is narrowed in direction towards the outlet (224) of the duct, from where there is connection to the pipe system (322, 330).

3. Apparatus according to claim 1 or 2, **characterised in that** the duct nozzle (20) and the duct outlet (22, 228) have approximately the same diameter.

4. Apparatus (2, 302, 304) according to at least one of claims 1 -3, **characterised in that** the apparatus (2) includes at least three lesser sub-chambers (8, 10, 12) which may be separated by means of two gates (10, 14).

5. Apparatus (2, 302, 304) according to at least one of claims 1 - 4, **characterised in that** at least one gate (10, 14) is connected to a control and regulating unit.

6. Apparatus (2, 302, 304) according to at least one of claims 1 -5, **characterised in that** the gates (10, 14) open and close in mutual dependence.

7. Apparatus (2, 302, 304) according to at least one of claims 1 -6, **characterised in that** the duct is disposed horizontally.

8. Apparatus (2, 302, 304) according to at least one of claims 1 -6, **characterised in that** the duct is disposed vertically.

9. Apparatus (2, 302, 304) according to at least one of claims 1 ― 8, **characterised in that** the outlet of the duct is connected to a pipe system, that the pipe system is fed from a plurality of ducts, that there is provided at least one inlet to the pipe system which is a high pressure inlet for medium under high pressure, and that high pressure inlets are formed as nozzles directed in the flow direction of the medium.

10. Apparatus according to at least one of claims 1―9, **characterised in that** the pipe system communicates with pressurised air nozzles which via regulating valves are connected to a system of pressurised air, where air is supplied to the pipe system in order to increase the flow rate of the medium.

11. Apparatus according to at least one of claims 1 -9, **characterised in that** the pipe system has at least one connection to venting valves.
